# EUROPÄISCHE PATENTANMELDUNG

(11) **EP 1 683 450 A1**
(43) Veröffentlichungstag der Anmeldung: **26.07.2006**
(21) Anmeldenummer: 06100672.2
(22) Anmeldetag: 20.01.2006
(51) Int. Cl.: A47J 17/02

(54) **Schälmesser**

(30) Priorität: 22.01.2005 DE 202005001017 U; 28.10.2005 DE 202005016925 U
(71) Anmelder: Proma high quality engineering GmbH, 96215 Lichtenfels (DE)
(72) Erfinder: Schmuck, Matthias, 96215, Lichtenfels (DE)
(74) Vertreter: Kinnstätter, Klaus

(57) **Zusammenfassung**

Die Erfindung betrifft ein Schälmesser (1), welches einen Handgriff (5) und eine in Verlängerung hierzu vorgesehene gabelförmige Klingenaufnahme (3) mit einer darin drehbar gelagerten Klingenanordnung (2) aufweist, welche Klingenaufnahme verschwenkbar an dem Handgriff befestigt ist. Durch eine kreisbogen- oder bogenförmige Klingenaufnahme und ein Lager (4), das auf der Klingenaufnahme verstellbar angeordnet ist, ist es möglich, die Klingenanordnung aus einer achsparallelen Position zur Grifflängsachse mindestens in eine quer hierzu verlaufenden Position zu verbringen, wobei die Klingenaufnahme um den Bogenkreismittelpunkt gedreht wird.

## Beschreibung

Die Erfindung betrifft ein Schälmesser, welches einen Handgriff und eine in Verlängerung hierzu vorgesehene gabelförmige Klingenaufnahme mit einer darin drehbar gelagerten Klingenanordnung aufweist, welche Klingenaufnahme verschwenkbar an dem Handgriff befestigt ist.

Schälmesser der gattungsgemäßen Art sind auch unter dem Begriff Sparschäler in verschiedenen Ausführungen bekannt. Aus der EP 1 417 913 A2 ist ein Sparschäler bestehend aus einem länglichen Griff mit darin angeordneter gabelförmiger Halterung, zwischen deren beiden Zinken eine Pendelklinge senkrecht zur Verlaufsrichtung des Griffes schwenkbeweglich gehalten ist, bekannt. Die Halterung ist dabei einstückig mit einem Zusatzwerkzeug verbunden und der gesonderte Griff schwenkbeweglich mit der Halterung verbunden, derart, dass in der Schälposition das Zusatzwerkzeug mindestens annähernd vollständig im Griff Aufnahme findet. Die Halterung mit ihren beiden Zinken weist eine halbkreisförmige Gestalt auf, an deren Zenit das Zusatzwerkzeug angeformt und der Griff quer zur Längsachse schwenkbeweglich fixiert sind.

Aus der DE 298 18 162 U1 ist ein Spargelschäler bekannt, der eine bogenförmige Klingenaufnahme aufweist, die drehbar an dem Griff befestigt und in verschiedenen Schwenkstellungen gegenüber der Längsachse des Griffes in Längsachsenebene verschwenkbar und feststellbar ist. Die Befestigung im Lager erfolgt mittels Flügelmutter und Spannschraube. Durch die gegebene Verschwenkung kann die Klingenaufnahme entweder nach rechts oder nach links verschwenkt werden derart, dass die Klingenanordnung im wesentlichen achsparallel zur Längsachse des Griffes, jedoch um die Bogenhöhe beabstandet hierzu verläuft, oder quer hierzu, wie dies bei der Nutzung als Schälmesser für Spargel üblich ist.

Aus der JP 2 000 175 808 A ist ebenfalls ein Schälmesser mit einer bogenförmigen Klingenaufnahme bekannt, zwischen deren freien Schenkeln ein Doppelklingenmesser drehbar angeordnet ist. Die Klingenaufnahme weist einen Lagersteg auf, der in ein Gabellager des Griffes eingesetzt und darin verschwenkbar gelagert ist, so dass die Klingenanordnung aus einer im wesentlichen quer zur Längsrichtung des Griffes verlaufenden Position in eine im wesentlichen parallel zur Grifflängsachse verlaufenden Position verschwenkbar ist.

Bei den bekannten Schälmessern mit schwenkbarer Klingenaufnahme ist der Nachteil gegeben, dass die Messerklinge bei Nutzung des Schälers als normalen Gemüseschäler um mindestens die Höhe des Bogens der Klingenaufnahme beabstandet parallel zur Längsachse des Randgriffes verläuft und deshalb schwieriger zu handhaben ist als vorbekannte Schälmesser, die einen Halteschaft aufweisen, an dem in axialer Verlängerung zum Griff eine Klinge vorgesehen und im wesentlichen dicht oder auf der Längsachse des Griffes verlaufend angeordnet ist. Die Klinge ist geschlitzt, wodurch einseitig eine Schneide gegeben ist, während die andere Seite als Führung dient. Bei der Handhabung zum Entfernen der Schale bei gewissen Gemüse- und Obstsorten hat sich gezeigt, dass am schnellsten mit einem solchen Sparschäler gearbeitet werden kann, wenn die Klinge dicht an der Längsachse des Griffes verläuft. Andererseits hat sich auch gezeigt, dass bei einem Schälmesser mit verschwenkbarer Klingenanordnung die Klinge in eine Position verbracht werden kann, die auch bei anderen Langgemüsesorten eingesetzt werden kann, wie beispielsweise zum Schälen von Spargel oder Schwarzwurzeln. In diesem Fall wird die Klingenaufnahme verstellt, so dass die Klinge im wesentlichen senkrecht auf die Schalenfaser trifft. Es besteht darüber hinaus die Forderung, dass ein solcher Sparschäler sowohl für Links- als auch Rechtshänder in gleicher Weise genutzt werden kann.

Ausgehend vom dargestellten Stand der Technik und den Nachteilen der bekannten Sparschäler liegt der Erfindung die Aufgabe zu Grunde, ein Schälmesser der gattungsgemäßen Art so weiterzubilden, dass es sowohl für Links- als auch Rechtshänder als Normalschäler genutzt werden kann als auch als Sonderschäler mit Verstellmöglichkeiten der Klingenanordnung gegenüber der Längsachse des Griffes, um eine individuelle Anpassung an das zu bearbeitende Gut unter Berücksichtigung der individuellen Handhabung durch den Benutzer zu gestatten.

Die Erfindung löst die Aufgabe durch Ausgestaltung des Schälmessers gemäß der im Anspruch 1 angegebenen Lehre.

Vorteilhafte Weiterbildungen der Erfindung sind in den Unteransprüchen im Einzelnen angegeben.

Die Klingenaufnahme einerseits und das Lager andererseits sind praktisch so aufeinander abgestimmt, dass eine relative Verschiebung der Klingenaufnahme im Lager möglich ist bzw. das Lager auf der Klingenaufnahme in verschiedene Positionen versetzt und in diesen dann befestigt werden kann. Die konstruktive Ausführung hängt von der Wahl der Materialien und insbesondere von der Ausbildung des Lagers ab. Beispielsweise kann ein Klemmlager vorgesehen sein, das mit seitlichen Klemmbacken und einer hakenförmigen Überwurfsicherung die Klingenaufnahme gewissermaßen klemmend umgreift. Die Klingenaufnahme wird im Lager gewissermaßen schwer verschiebbar gehalten. Es können auch zwei solche Klemmbacken vorgesehen sein, die das Lager bilden und beabstandet zu einander vorgesehen sind, wodurch eine noch stabilere Lagerung der Klingenaufnahme gewährleistet ist. Das Lager kann auch an die Klingenaufnahme in den gewünschten Stellwinkeln anschraubbar ausgeführt sein.

Es können auch schwergängige oder auch leichtgängige Gleitlager vorgesehen sein, die eine der Querschnittskontur der Klingenaufnahme angepasste Lagerstelle aufweisen. In einem solchen Fall empfiehlt es sich, Rastungen vorzusehen, um eine Arretierung des Lagers und damit des Griffes in den verschiedenen Verschiebestellungen auf der Klingenaufnahme zu ermöglichen, mindestens aber in den beiden Endpositionen, in denen die Klingenanordnung zum einen achsparallel zur Längsachse des Griffes oder zum anderen quer hierzu verläuft. Vielfach ist es aber auch gewünscht, dass Zwischenpositionen eingenommen werden, also Tangentialpositionen zur Schnittrichtung, um beispielsweise bestimmte Muster beim Schälen schneiden oder auch um die optimale Handführung eines Benutzers besser ausnützen zu können. Zur Fixierung auch in diesen Positionen können weitere rastende Mittel vorgesehen sein. Bei einer Ausbildung des Lagers als Gleitlager können die Rastelemente in die Ebene der Klingenaufnahme eingebracht sein und die Rastgegenelemente an dem Lager oder die Lagerschenkel die vorstehenden Rastansätze an den Gleitflächen der Klingenaufnahme hintergreifen.

Im Falle der Verwendung von Klemmlagern empfiehlt es sich, für die Klingenaufnahme beispielsweise eine Kreuzquerschnittsform zu wählen und die federnden Lagerschenkel am Lager dieser Kreuzform anzupassen. Durch die Konstruktion wird erreicht, dass die Klingenaufnahme um den Halbkreismittelpunkt gedreht wird bzw. bei bogenförmiger Ausführung, die keinem Kreisbogen entspricht, um den Mittelpunkt des durch die Klingenanordnung begrenzten Bogens. Hierdurch ist es möglich, die Klingenanordnung dicht an die Längsachse des Griffes heranzuführen und bei gekröpftem Lager in die Längsachse zu legen. Der Abstand hierzu sollte im Idealfall stets kleiner sein als die Hälfte der Breite des Durchmessers bzw. des Griffes.

Das hier angegebene Lager ist in der Regel einteilig mit dem Griff ausgebildet oder kann ein Griffverbindungsteil aufweisen, auf das der Griff aufsteckbar ist, so dass dieser Wechselgriff für verschiedene Bearbeitungsköpfe verwendet werden kann. Bei der austauschbaren Einrichtung versteht es sich von selbst, dass an dem Lager ein Lagerzapfen zum Einschieben in eine Lagerungsbohrung in dem Griff vorgesehen sein muss bzw. bei kinematischer Umkehr in dem Lager eine Lagerungsausnehmung. Die Klingenanordnung kann aus einer Einfachklinge mit Führung oder aus einer Doppelklinge bestehen. Bewährt hat sich die pendelnde Aufhängung, d.h. durch Formung ist die Pendelachse außermittig gelegt, so dass beim Schneiden der Schale der entsprechenden Frucht oder des Gemüses automatisch eine Anlegung an die Oberfläche erfolgt.

In weiterer Ausgestaltung ist vorgesehen, dass die Klingenaufnahme nicht nur in zwei Achsenebenen gebogen ausgeführt ist, sondern auch in einer 3-dimensionalen Ausführung, so dass ein gewünschter seitlicher Versatz gegenüber der Längsachse des Griffes auch dann gegeben ist, wenn die Klingenanordnung quer zur Längsachse des Griffes verläuft. Auch dabei sollte in der dritten Dimension der Bogen so gewählt sein, dass die Klingenanordnung mit der äußeren Fläche des Griffes fluchtet, um eine gute Handhabe, auch als Spargelschälmesser, zu gewährleisten.

Des Weiteren können am Lager mindestens einseitig Fingeraufnahmen zum Einlegen des Zeigefingers oder des Daumens vorgesehen sein, um eine noch bessere Führung beim Schneiden zu ermöglichen.

Sowohl die Klingenaufnahme als auch das Lager und auch der Griff können aus Kunststoff oder Metall gefertigt sein. Auch können die Teile aus unterschiedlichen Materialien zusammengesetzt sein. Der Griff kann auch aus einem Naturmaterial, wie Holz bestehen. Es versteht sich dabei von selbst, dass bei der Verwendung von Kunststoff den lebensmittelrechtlichen Bestimmungen entsprechen muss. Als besonders geeignet haben sich folgende Kunststoffe erwiesen: PC, PE, PES, ABS und TPE. Das Lager für die Klingenaufnahme oder die Klingenaufnahme können auch aus BOM oder aus Metall gefertigt sein.

Die Klingenanordnung ist in bekannter Weise in den Schenkeln der bogenförmigen Klingenaufnahme verankert. Als Klingenanordnung können bekannte Doppelklingen, Einzelklingen und sonstige Spezialklingen zur Anwendung kommen. Auch können an den Bogenenden außenseitig Hilfswerkzeuge, wie Ausstecher, vorgesehen sein. Des Weiteren kann bei Verwendung eines Wechselgriffes auch mit diesem ein anderer Bearbeitungskopf, zum Beispiel ein Messer, verbunden werden. Es ist ersichtlich, dass durch die verschwenkbare Lagerung um ca. 180° bei halbkreisbogenförmiger Klingenaufnahme eine Handhabe durch Links- oder Rechtshänder gewährleistet ist.

Die Erfindung wird nachfolgend anhand des in der Zeichnung dargestellten Ausführungsbeispieles ergänzend erläutert.

In den Zeichnungen zeigen:
- FIG 1: ein Schälmesser nach der Erfindung mit vertikaler Klingenanordnung und
- FIG 2: ein Schälmesser mit horizontaler Klingenanordnung.

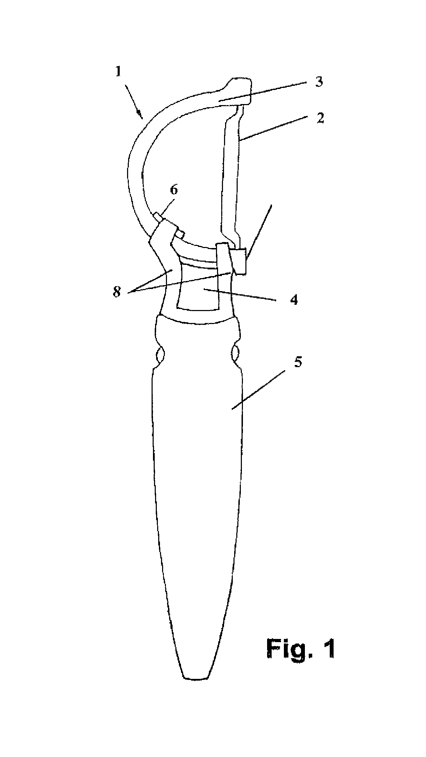

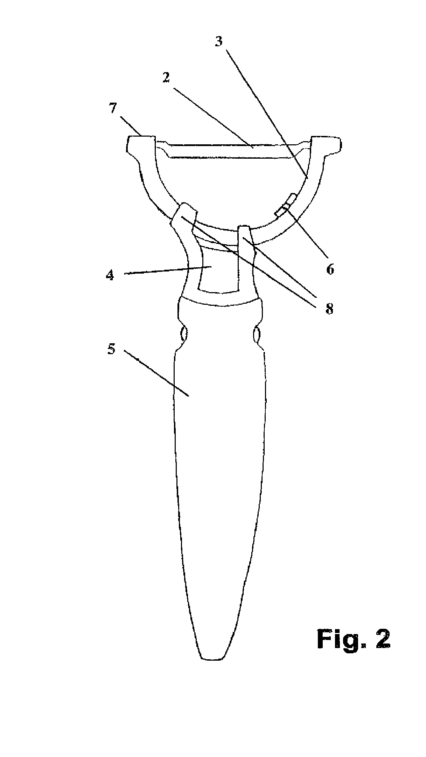

Das in den Figuren 1 und 2 angegebene Ausführungsbeispiel eines Schälmessers 1 nach der Erfindung besteht aus einem Griff 5, an dem ein Lager 4 angeformt oder befestigt ist. Dieser Griff 5 und das Lager 4 sind beispielsweise einteilig aus Kunststoff gefertigt, wobei der Griff 5 auch mit einem grifffreundlichen Kunststoff überzogen sein kann oder im Komponentenspritzverfahren ein solcher aufgespritzt sein kann. Das Lager 4 weist zwei Lagerschenkelpaare 8 auf, die jeweils eine Klemmöffnung im Querschnitt der Klingenaufnahme 3 bilden und die Klingenaufnahme federnd übergreifen. Durch die hierdurch gegebene Einklemmung ist eine Selbsthaltung der halbkreisbogenförmigen Klingenaufnahme 3 gewährleistet. Diese halbkreisbogenförmige Klingenaufnahme 3 weist an ihren Enden Fingeraufnahmen 7 auf, um ein leichteres Verschieben innerhalb des Lagers 4 mit den Schenkeln 8 zu ermöglichen. Bei den Fingeraufnahmen 7 handelt es sich praktisch um Vergrößerungsabschnitte. Diese können beispielsweise auch als Ausstecher ausgebildet sein. Zwischen den beiden Schenkeln der Klingenaufnahme ist verschwenkbar die Klingenanordnung 2 zwischengefügt und in den Schenkeln pendelnd gelagert.

Des Weiteren ist, wie aus Figur 2 ersichtlich, an der Klingenaufnahme 3 ein Ansatz 6 vorgesehen, der von einem der federnden Schenkel 8 rastend hintergriffen wird, wenn die Klingenaufnahme 3 in die in Figur 1 dargestellte Position verschwenkt wird, in der die Klingenanordnung 2 im wesentlichen parallel zur Längsachse des Griffes 5 verläuft. Eine solche Raste kann auch vorgesehen sein, wenn die Klingenaufnahme 3 um 90° verschwenkt wird, wie dies aus Figur 2 ersichtlich ist. In dieser Ausführung kann das Schälmesser beispielsweise als Spargelschälmesser verwendet werden.

## Patentansprüche

1. Schälmesser, aufweisend einen Handgriff (5) und eine in Verlängerung hierzu vorgesehene gabelförmige Klingenaufnahme (3) mit einer darin drehbar gelagerten Klingenanordnung (2), welche Klingenaufnahme (3) verschwenkbar an dem Handgriff (5) befestigt ist, **gekennzeichnet durch** eine kreisbogen- oder bogenförmige Klingenaufnahme (3) und ein Lager (4), das auf der Klingenaufnahme (3) verstellbar derart angeordnet ist, dass die Klingenanordnung (2) aus einer achsparallelen Position zur Grifflängsachse mindestens in eine quer hierzu verlaufende Position verbringbar ist.

2. Schälmesser nach Anspruch 1, **dadurch gekenn- zeichnet** , dass die Achse der Klingenanordnung in der achsparallelen Position zur Grifflängsachse in etwa mit der Griffaußenseite fluchtet oder zwischen Längsachse und Griffaußenseite endet.

3. Schälmesser nach Anspruch 1 oder 2, **dadurch ge- kennzeichnet** , dass die Klingenaufnahme (3) einen definierten Querschnitt als Verstellbereich für das Lager (4) aufweist, und dass das Lager (4) als selbstklemmendes Lager ausgebildet und auf die Klingenaufnahme (3) verschiebbar aufgesetzt oder aufgeklippt ist, derart, dass die Klingenaufnahme (3) aus einer Position, in der die Klingenanordnung im wesentlichen parallel zur Längsachse des Griffes (5) verläuft, in mindestens eine Position horizontal hierzu verbringbar ist, in der die Klingenanordnung (2) im wesentlichen rechtwinklig zur Längsachse des Griffes (5) verläuft.

4. Schälmesser nach Anspruch 3, **dadurch gekenn- zeichnet**, dass die Klingenaufnahme (3) oder das Lager Rastansätze oder Rastfederansätze aufweist, die zumindest in den Endpositionen des Verstellbereiches der Klingenaufnahme (3) die Rastansätze oder Rastfederansätze an den Gleitflächen der Klingenaufnahme (3) arretierend hintergreifen oder in Rastausnehmungen eingreifen.

5. Schälmesser nach Anspruch 1, **dadurch gekenn- zeichnet**, dass das Lager (4) zusätzlich eine Schwenkachse quer zur Längsachse des Griffes (5) aufweist.

6. Schälmesser nach Anspruch 1, **dadurch gekenn- zeichnet** , dass die Klingenanordnung (2) eine drehbar oder pendelnd gelagerte Doppelklinge ist.

7. Schälmesser nach Anspruch 1, **dadurch gekennzeichnet , dass** die Klingenaufnahme (3) derart ausgestaltet ist, dass der Verschiebebereich über mindestens 90° möglich ist.

8. Schälmesser nach Anspruch 1, **dadurch gekenn- zeichnet** , dass die Klingenaufnahme (3) 3-dimensional gebogen ausgeführt ist.

9. Schälmesser nach Anspruch 1, **dadurch gekennzeichnet , dass** an der Klingenaufnahme (3) und/oder am Lager (4) eine Fingeraufnahme mindestens einseitig eingeformt ist.

10. Schälmesser nach Anspruch 1, **dadurch gekennzeichnet , dass** die Klingenaufnahme (3) und das Lager (4) aus Kunststoff oder Metall oder aus unterschiedlichen Materialien gefertigt sind.

11. Schälmesser nach Anspruch 1, **dadurch gekenn- zeichnet**, dass das Lager (4) und der Griff (5) einteilig ausgebildet sind.

12. Schälmesser nach Anspruch 1 oder 11, **dadurch ge- kennzeichnet**, dass der Griff als Wechselgriff ausgeführt ist und am Lager oder dieses an der Klingenaufnahme (3) lösbar befestigt ist.
